# EUROPEAN PATENT SPECIFICATION

(11) **EP 0 550 275 B1**
(45) Date of publication and mention of the grant of the patent: **12.02.2003**
(21) Application number: 92311853.3
(22) Date of filing: 30.12.1992
(51) Int. Cl.: H04Q 11/04, H04M 3/50

(54) **Audio circuit board for a modular digital voice processing system**
Sprachschaltungsplatte für ein modulares digitales Sprachverarbeitungssystem
Plaquette de circuit de parole pour un système modulaire digital de traitement de la parole

(30) Priority: 31.12.1991 US 815205
(43) Date of publication of application: 07.07.1993
(73) Proprietor: DICTAPHONE CORPORATION, Stratford, CT 06497 (US)
(72) Inventor: Daly, Daniel F., Monroe, CT 06468 (US); Dwyer, John J., Stratford, CT 06497 (US)
(74) Representative: Holmes, Miles Keeton

(56) References cited:
- WO-A-87/01547
- US-A- 4 549 047
- US-A- 4 785 473

## Description

Digital voice processing systems are known that are in communication with telephone systems and perform functions such as voice signal compression, data storage and retrieval, automatic gain control, voice activated operation, telephone functions and the like. These functions previously had been performed in hardware which is costly and inflexible. In addition, expansion of prior art voice processing systems is difficult because of the need for additional hardware, not only because of the expense associated therewith, but also because of the geography factor i.e. a larger footprint is required.

With the ever increasing change in technology, particularly software, it would be advantageous to be able to provide advanced software for a voice processing system so that the system can be quickly, conveniently and inexpensively expanded. In addition, it would be advantageous to provide a digital voice processing system which is capable of handling a large quantity of incoming data and which is capable of being expanded. To achieve the above goals, it is necessary to provide a physical interface for incoming voice signals and processing them so that subsequent signal and application processes can take place.

US Patent No. 4549047 discloses a system for receiving, storing and retransmitting voice messages. The system converts between analogue telephone signals and the digital data that the system uses for message storage. A microprocessor is provided to control the system, and to monitor the status of telephone lines connected thereto.

International Application No. 87/01547 discloses a subscriber line card arrangement in which each of eight subscriber lines is interfaced by a respective high voltage analogue circuit, followed by a low voltage circuit. A signal CMOS DSP is multiplexed between each of the eight channels.

In accordance with the invention, there is provided an audio card for a modular digital voice processing system, the card comprising:
a) a circuit board;
b) a time division multiplexer chip supported on said board and having means for communication with a bus;
c) a processor supported on said board in communication with said time division multiplexer chip; and
d) an interface supported on said board in communication with said processor, wherein the interface comprises a plurality of ports that each include a CODEC, the CODEC being operable to convert analog signals received from units external to said card into digital data, each port including optical switches controlled to configure the port to operate either in a loop start mode of operation or in a private wire mode of operation.

A modular digital voice processing system has been conceived and developed wherein voice processing functions are run in software. This allows a modular structure whereby units can be readily added or removed so that the number of components can be increased readily for greater capacity. A host computer is in communication with one or more applications circuit boards, referred to hereafter as application cards, that perform both application processing and digital voice and telephone processing. The voice application cards are in communication with audio circuit boards, hereinafter referred to as audio cards, through a time division multiplexer (TDM) bus. Each audio card, which is the subject of the instant invention, may include an analogue unit that converts analogue signals from telephones, dictation machines and the like, to digital signals which are received by a signal processing chip that is used as a high speed multiplexer. The signal processing chip can transmit data to a time division multiplexer (TDM) chip which can then send the data onto the TDM bus. The data may subsequently be received by the voice processing card. The voice processing card can perform application processing such as signal'compression, automatic gain control, voice activate operation and the like. Subsequent to the application processing taking place, data can be forwarded from the voice processing card to the host computer for further processing and storage. Upon completion of the particular operation, the voice processing system can send a signal to the audio card to terminate the operation until retrieval is required.

The invention will be better understood from the following nonlimiting description of an example thereof given with reference to the accompanying drawings in which:-
Fig. 1 is a block diagram of a system in which a circuit according to an embodiment of the invention can be employed;
Fig. 2 is a plan view of the system shown in Fig. 1;
Fig. 3 is a block diagram showing details of the circuit (audio card) shown in Fig. 1; and
Fig. 4 is a block diagram of one of the audio ports shown in Fig. 3.

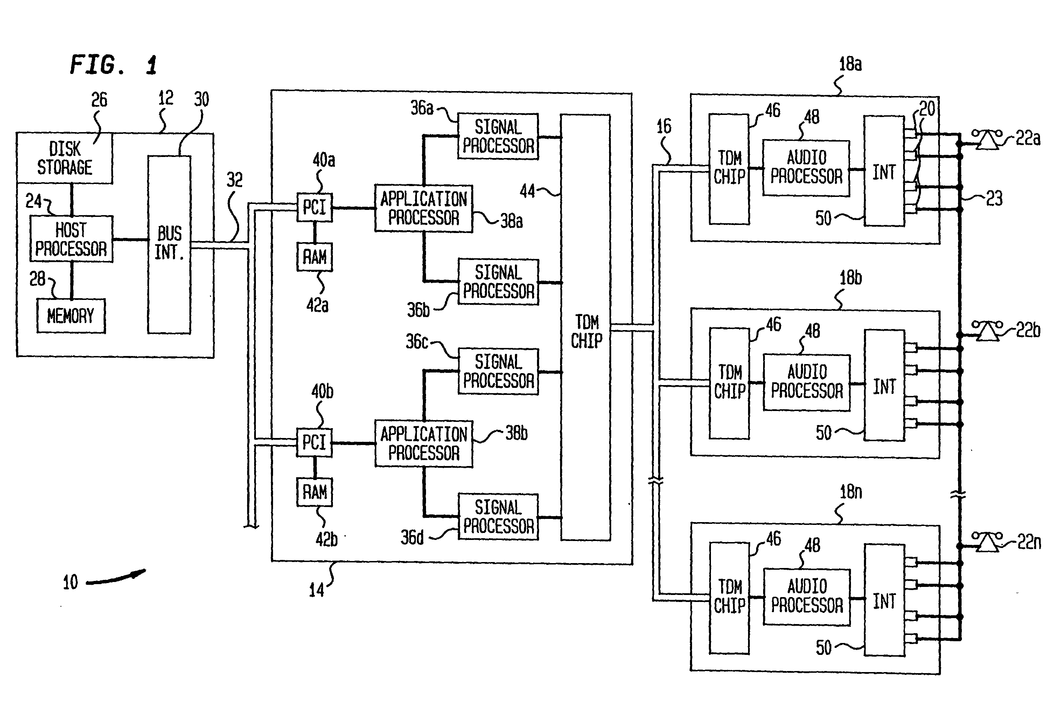

With reference to FIG 1, a digital voice processing system is shown generally at 10 in which a circuit (audio card) according to the invention could be used. The voice processing system has a host computer 12, a main card 14, also referred to as the voice processing card 14, and a bus 16 that connects the voice processing card to a plurality of audio cards 18a, 18b...18n. Each audio card 18a, 18b...18n has a plurality of ports 20 through which communication can be had with a plurality of devices, such as direct connect and loop start telephones 22a, 22b...22n, through telephone lines 23. Functions such as telephone communication, dictation, answering machines and the like can be performed by the system 10.

The host computer 12 can be any of a number of commercially available computers such as an IEEE 996 Standard PC/AT which includes a host processor 24, which is in communication with a disk storage 26 and a memory 28. The processor 24 is also in communication with a bus interface 30. The disk storage 26 acts as a storage medium for storing prompts, operating data, base directory information and other digital data. The disk storage also provides data storage capacity when the other memories of the system 10 have their capacity exceeded. Prompts are recorded messages, instructions and menus that are for the purpose of assisting a caller in the use of the voice processing system 10. The memory 28 is a volatile memory which receives the operating code from the disk storage on start up. The memory 28 will run code, store system information and diagnostics information and also serves as a buffer. The bus interface 30 provides communication between the processor 24 and the voice processing card 14 through the bus 16.

The voice processing card 14 has essentially two independent circuits therein which will be described simultaneously. Each circuit has a PC interface (PCI) chip 40a, 40b to which a RAM 42a, 42b, respectively, is connected for temporary storage of data and storage of the operating code for the voice processing card. Each interface 40a, 40b is in communication with an application processor 38a, 38b, respectively, such as an Intel 80C 186. The application processors 38a, 38b run the application programming and database management. Each application processors 38a, 38b is in communication with and controls a pair of signal processors 36a and 36b and 36c and 36d, respectively, which may be TMS 320/C/25 chips from Texas Instruments. Each chip 36a - 36d is in communication with a time division multiplexer chip 44 which is in communication with the bus 16. The signal processors 36a - 36d perform digital signal processing such as control, information decoding, telephone processing and tone generation.

Each audio card 18 is in communication with the bus 16 and includes a time division multiplexer (TDM) chip 46 which is essentially identical to the TDM chip 44 of the main card 14 except that it has fewer components because it only communicates with one processor, an audio processor 48. Details of the TDM 44, 46 are shown and described in concurrently filed European patent application No. 0554626 and entitled Time Division Multiplexer Chip and Process Thereof. The audio processor 48 is a high speed processor, such as a TMS 320/C10 available from Texas Instruments, and is in communication with an analogue interface 50 which interfaces through the ports 20 with a plurality of direct connect and loop start telephones 22a, 22b... 22n, through telephone lines 23. The analogue interface can also communicate with public switch networks, public broadcasting exchange, PBX and the like.

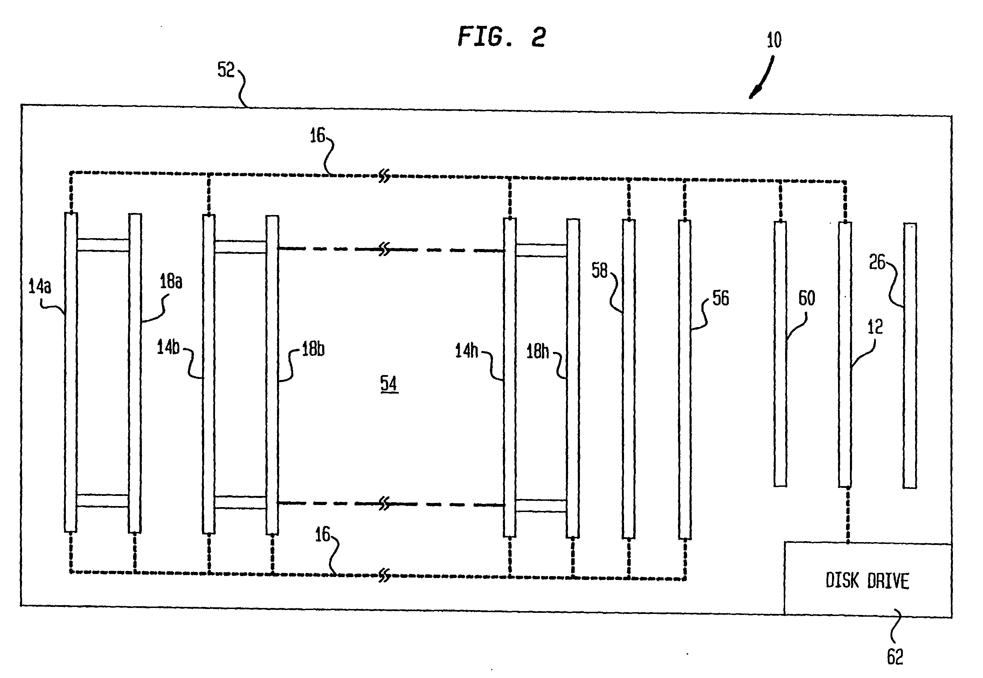

With reference to FIG 2, the architecture of the digital voice processing system 10 is shown in plan view. The system 10 includes a housing 52 having a base 54 to which the main boards 14 and audio cards 18 are physically attached in pairs without necessarily being logically connected so that the cards can be logically intermixed with one another. More specifically, and by way of example, the voice processing card 14b can be physically connected to the audio card 18b but logically connected to the audio card 18a. In FIG 2, the system 10 is shown having eight main cards 14a-14h and audio cards 18a-18h, but some of the voice processing cards 14 could be replaced with dummy cards 14 that only provide the physical support and electrical connections to the audio cards 14. Also included is a sixteen port audio card 56, a clock buffer 58, a local area network (LAN) card 60, the host computer 12, a disk drive 62 and the disk storage 26. The 16 port audio card can be added to expand the capacity of the system and its structure will be similar to the audio card 18a-18n shown in FIG 1. The 16 port audio card 58 is supported by a dummy card 57. The audio cards 14a-14b, 56 are connected to the host computer 12 through a bus 41.

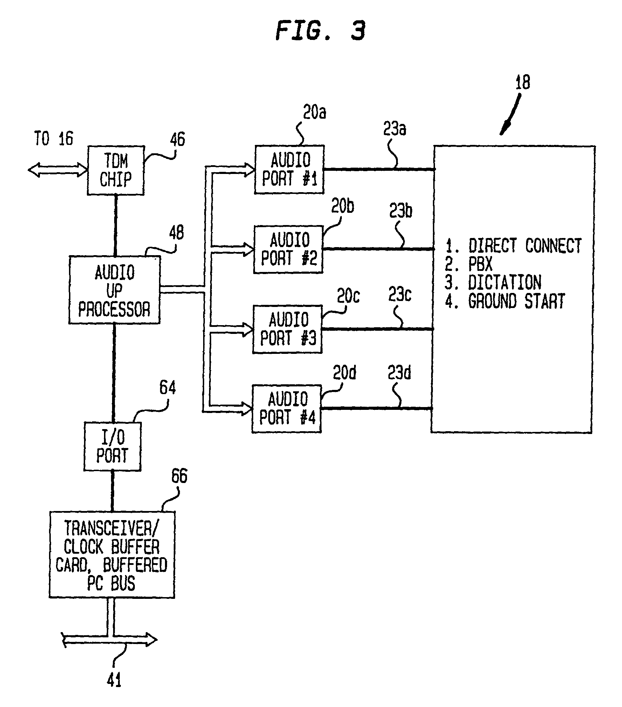

With reference to FIG 3, the audio card 18 will be described in greater detail. Each audio card 18 is physically mounted to a voice processing card 14 such that the combined unit occupies only one slot in the base 54. Each audio card 18 obtains its operating power and interfaces with its associated voice processing card 14 through the time division multiplexed bus 16. In this respect the audio card 14 is not a stand alone card but requires either a voice processing card 14 or a dummy board 57 that will provide the necessary electrical connections and physical support. As seen in FIG 1, each voice processing card can logically communicate with any audio card 18a-18n in the system 10 and is not confined to communication with the audio card to which it is attached.

Each audio card 18 has four separate ports 20 which interface with an analog telephone network or to a private wire network (PWN). Each port 20a-20d of the audio card 18 can be individually set to a telephone or PWN interface. The analog voice from these sources is transformed into digital information (and back) via individual CODECS on each port 20. The digital information from each port 20, along with other board functions, is controlled by the audio processor 48. The audio processor 48 also communicates with the host computer 12 and clock buffer 58 via an input/output port 64 which is connected to a buffer 66 which in turn is connected to the bus 41. The audio processor 48 is connected to the TDM bus 16 via an on-board TDM chip 46. The digital voice information along with control/status is interchanged between a voice processing card 14 and an audio card (not necessarily the one the audio card is mounted to) via the TDM bus 16. The PC bus 41 is used for receiving control information and for handling diagnostics.

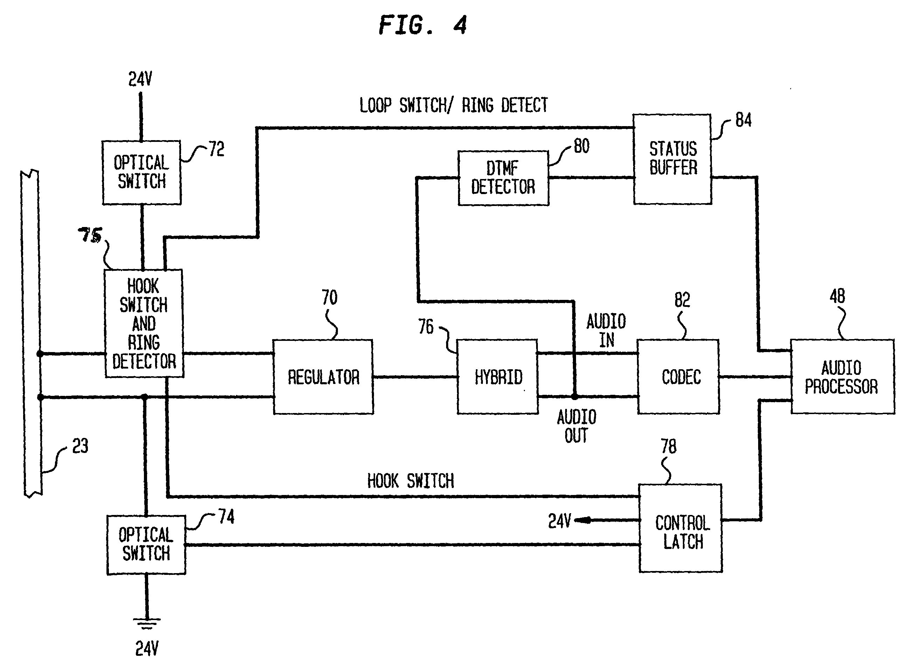

The details of the ports 20 are shown in FIG 4. A regulator 70 is connected to a telephone line 23, an optical switch, 74 and a hook switch and ring detector 75 which is in communication with another optical switch 72. The regulator 70 is also in communication with a hybrid 76. The optical switch 72 receives a 24 volt supply from a battery (not shown) and the optical switch 74 is ground to 24 volts. The optical switch 74 and hook switch and ring detector 75 are in communication with a control latch 78. The hybrid 76 is also in communication with a DTMF (dual tone multifrequency) detector 80 and a CODEC 82. The DTMF detector 80 and the hook switch and ring detector 75 are in communication with a tri-state status buffer 84. The status buffer 84, the CODEC 82 and the latch 78 are in communication with the audio processor 48.

In operation, the interface 50 of the audio card 18 is divided into four separate ports 20a-20d with analog/digital circuitry that connect to a common digital section. Each port 20 can be configured for a loopstart telephone interface, for access to a PWN (private wire network) or with a PBX interface through optical switches 72, 74. Each port 20 is thus set for a dedicated mode of operation. The modes are enabled by setting each of the optical switches 72, 74. The audio card 14 can operate in a ground start environment from a PBX through the optical switch 74 being open and the optical switch 72 being closed.

In a loopstart application, both the switches 72, 74 are open and the PBX, or central office, supplies the battery voltage for generating loop current. The regulator 70 provides an optical hook switch for line seizure and bidirectional optical switch for ring/loop current detection.

In an analog private wire situation, the audio circuit board 18 provides the battery voltage to the system terminals. In this mode, both optical switches 72, 74 are closed. The hook switch and ring detector senses a terminal seizing the line via a loop current detector of the hybrid 76 and can pulse ring the terminal by opening the optical switch 72 which is connected to the plus side of the 24 volt battery supply and closing the hookswitch and ring detector 75. Thereafter, it will open the hookswitch and detector 76 and close the optical switch 72.

In a ground start mode, the telephone line 23 is attached to a trunk card of a PBX. The optical switch 72 is attached to the plus lead of the battery supply and is closed and the other optical switch 74 is open. In this manner, loop current can be detected and then the second optical switch 74 is closed in response to the PBX.

The ports 20a - 20d provide the following functions and capabilities:
Assures proper impedance matching via the hybrid 76 to the telephone network.
The hybrid 76 assures that the proper signal levels are presented to the network and that the signals received from the network are correctly conditioned before reaching the CODEC.
The DTMF detector monitors the in coming signals to extract DTMF information and decode it. The DTMF receiver outputs the DTMF information as four bit parallel data along with DTMF qualifying signals.
The hybrid 76 detects incoming ring signals and provides a digital signal reflective of the duration and cadence of the ring.
The regulator 70 and hybrid coordinate to detect any absence or presence of loop current and regulates the loop current and seize voltage.
The hybrid 76 controls the optical switches 72, 74 to configure the port for a particular external interface.
The hybrid 76 provides an optical switch for doing on-hook/off -hook and ring/loop current detection.
The hybrid 76 provides a 6db pad (software controlled)for signal attenuation when in a private wire interface mode.
The hybrid 76 provides a digitally controlled pot for balancing trans hybrid gain which is also under software control to enable the gain to be increased for better resolution of the pot adjustment.

The CODEC 82 used in the audio card 18 converts audio into 8 bit parallel ulaw pcm (pulse code modulation which could be voice signals) data. The pcm data is read from the CODEC by the audio processor 48. Conversely, the voice data is written to the CODEC 48 in the same manner. The CODEC sampling rate is a frame of 125 µsec (8khz) and the audio processor 48 reads and writes each CODEC once during each frame. The CODEC 82 can be accessed virtually at any time during each frame. The CODEC 82 can be programmed for various clocks and operating modes by enabling the program input and writing command on the parallel input.

Associated with the CODEC 82 is a tri-state status buffer 84 and a tri-state latch 78. The buffer 84 monitors the status of the hook switch and ring detector 76 and the DTMF detector 80. The buffer 84 outputs are attached to the audio processor 48. When the audio processor 48 reads the data from the bus 16, it also reads in the port status from the status buffer 84. The control latch 78 inputs are attached to the audio processor 48 and when the audio processor 48 writes voice data to the CODEC, it also writes a command byte to the control latch 78. The outputs of the control latch 78 are connected to the hook switch and ring detector 75 and the optical switch 74 to control the operation of the port.

Thus what has been shown and described is an audio circuit board that has particular utility in a digital voice processing system wherein components, software, and applications can be readily changed without the need of replacing hardware.

## Claims

1. An audio card for a modular digital voice processing system, the card comprising:
a) a circuit board (18a-18n);
b) a time division multiplexer chip (46) supported on said board and having means for communication with a bus (16);
c) a processor supported (48) on said board in communication with said time division multiplexer chip; and
d) an interface (50) supported on said board in communication with said processor, wherein the interface (50) comprises a plurality of ports (20) that each include a CODEC (82), the CODEC being operable to convert analog signals received from units external to said card into digital data, each port (20) including optical switches (72,74) controlled to configure the port to operate either in a loop start mode of operation or in a private wire mode of operation.

2. A card according to claim 1, wherein each of said ports (20) comprises at least one switch (75) in communication with a telephone line (23), a regulator (70) in communication with said at least one switch, and a hybrid (76) in communication with said regulator (70), and said CODEC (82).

3. A card according to claim 2, comprising a DTMF detector (80) in communication with said hybrid (76) and a status buffer (84) in communication with said at least one switch and said CODEC (82).

4. A card according to claim 2 or claim 3, comprising a second switch (74) for communication with a telephone line (23) and a control latch (78) in communication with said second switch (74).

5. A card according to any of claims 2 to 4, wherein said at least one switch is a switch hook and ring detector (75).

## Patentansprüche

1. Audiokarte für ein modulares digitales Sprachverarbeitungssystem, wobei die Karte aufweist:
a) eine Leiterplatte (18a-18n),
b) einen Zeitmultiplexchip (46), der auf der Platine getragen wird und mit Einrichtungen für die Kommunikation mit einem Bus (16),
c) einen Prozessor (48), der auf dem Board getragen wird und in Kommunikation mit dem Zeitmultiplexchip ist, und
d) ein Interface (50), das auf der Platine getragen wird und in Kommunikation mit dem Prozessor steht, wobei das Interface (50) eine Mehrzahl von Anschlüssen (20) aufweist, die jeweils einen CODEC bzw. einen Codierer/Decodierer (82) beinhalten, wobei der CODEC derart betreibbar ist, daß er analoge Signale, die von Einheiten außerhalb der Platine empfangen werden, in digitale Daten umwandelt, wobei jeder Anschluß (20) optische Schalter (72, 74) beinhaltet, die gesteuert werden, um den Anschluß zu konfigurieren, damit er entweder in einem Schleifenstartbetriebsmodus oder in einem Meßleitungsbetriebsmodus betrieben wird.

2. Karte nach Anspruch 1, wobei jeder der besagten Anschlüsse (20) zumindest einen Schalter (75), der in Verbindung mit einer Telefonleitung (23) steht, einen Regler (70), der in Verbindung mit dem zumindest einen Schalter steht, und eine Gabelschaltung (76) aufweist, die in Verbindung mit dem Regler (70) und dem CODEC (82) steht.

3. Karte nach Anspruch 2, die einen DTMF-Detektor (80), der in Verbindung mit der Gabelschaltung (76) steht und einen Statuspufferspeicher (84) aufweist, der in Verbindung mit dem zumindest einen Schalter und dem CODEC (82) steht.

4. Karte nach Anspruch 2 oder Anspruch 3, die einen zweiten Schalter (74) für die Verbindung mit einer Telefonleitung (23) und ein Steuerlatch (78) aufweist, das in Verbindung mit dem zweiten Schalter (74) steht.

5. Karte nach einem der Ansprüche 2 bis 4, bei der der zumindest eine Schalter ein Gabelumschalter und Ringdetektor (75) ist.

## Revendications

1. Carte audio pour un système modulaire de traitement numérique de la parole, la carte comprenant :
a) une carte de circuit (18a à 18n) ;
b) une puce de multiplexeur à division temporelle (46) supportée sur ladite carte et comportant un moyen pour communication avec un bus (16) ;
c) un processeur supporté (48) sur ladite carte en communication avec ladite puce de multiplexeur à division temporelle ; et
d) une interface (50) supportée sur ladite carte en communication avec ledit processeur, où l'interface (50) comprend une pluralité de ports (20) incluant chacun un CODEC (82), le CODEC pouvant être actionné pour convertir en données numériques des signaux analogiques reçus depuis des modules externes à ladite carte, chaque port (20) incluant des commutateurs optiques (72, 74) commandés de manière à configurer le port pour fonctionner soit dans un mode de fonctionnement de départ de boucle, soit dans un mode de fonctionnement de câblage privé.

2. Carte selon la revendication 1, dans laquelle chacun desdits ports (20) comprend au moins un commutateur (75) en communication avec une ligne téléphonique (23), un régulateur (70) en communication avec ledit au moins un commutateur et un dispositif hybride (76) en communication avec ledit régulateur (70) et ledit CODEC (82).

3. Carte selon la revendication 2, comprenant un détecteur DTMF (80) en communication avec ledit dispositif hybride (76) et un tampon d'état (84) en communication avec ledit au moins un commutateur et ledit CODEC (82).

4. Carte selon la revendication 2 ou la revendication 3, comprenant un second commutateur (74) pour communication avec une ligne téléphonique (23) et un verrou de commande (78) en communication avec ledit second commutateur (74).

5. Carte selon l'une quelconque des revendications 2 à 4, dans laquelle ledit au moins un commutateur est un support de combiné et détecteur de sonnerie (75).
